# EUROPÄISCHE PATENTANMELDUNG

(11) **EP 1 611 821 A1**
(43) Veröffentlichungstag der Anmeldung: **04.01.2006**
(21) Anmeldenummer: 05090123.0
(22) Anmeldetag: 04.05.2005
(51) Int. Cl.: A47F 3/08, A47F 3/11

(54) **Umlaufförderer**

(30) Priorität: 11.05.2004 DE 202004007720 U
(71) Anmelder: Kardex Organisationssysteme GmbH, 61476 Kronberg (DE)
(72) Erfinder: Grob, Peter, CH-8604 Volketswil (CH)
(74) Vertreter: Grünecker, Kinkeldey, Stockmair & Schwanhäusser Anwaltssozietät

(57) **Zusammenfassung**

Zur Präsentation von Gegenständen, wie z.B. Uhren und Schmuckstücke in Geschäftsräumen oder auf Messen, wurde ein Umlaufförderer in Paternosterbauart entwickelt, bei dem zwischen den Bewegungsbahnen von Tablaren (10) ein zur Aufnahme von Leuchtstoffröhren dienender Lichtschacht (11) mit durchscheinenden Wänden angeordnet ist.

## Beschreibung

Die Erfindung betrifft einen Umlaufförderer in Paternosterbauart für Präsentationszwecke mit durch Antriebsstränge angetriebenen Tablaren, die längs einer geschlossenen Bahn in einem Gehäuse bewegt werden, das mindestens im Bereich seiner Vorderwand eine die Besichtigung von auf den Tablaren abgelegten Gegenständen erlaubende Scheibe aufweist.

Bekannt sind Umlaufförderer der vorstehenden Art, die insofern nicht voll zu befriedigen vermögen, als die auf ihren Tablaren abgelegten Gegenstände nicht unter optimalen Lichtverhältnissen präsentiert werden.

Der Erfindung liegt die Aufgabe zugrunde, dem angedeuteten Mangel abzuhelfen. Gelöst wird diese Aufgabe erfindungsgemäß dadurch, dass zwischen den Bewegungsbahnen der Tablare in einem mindestens partiell aus durchscheinendem, aber nicht durchsichtigem Material bestehenden Lichtschacht Leuchtmittel angeordnet sind.

Der erfindungsgemäße Umlaufförderer bietet den Vorteil einer ansprechenden und Kaufinteresse fördernden Ausleuchtung seines Schauraumes. Die auf den Tablaren präsentierten Gegenstände werden vor einer Art Lichtwand angeboten, die eine gleichmäßige Ausleuchtung des Schauraumes begünstigt.

Die Erfindung wird im Folgenden anhand einer in den beigefügten Zeichnungen schematisch dargestellten Ausführungsform näher erläutert. Es zeigen:

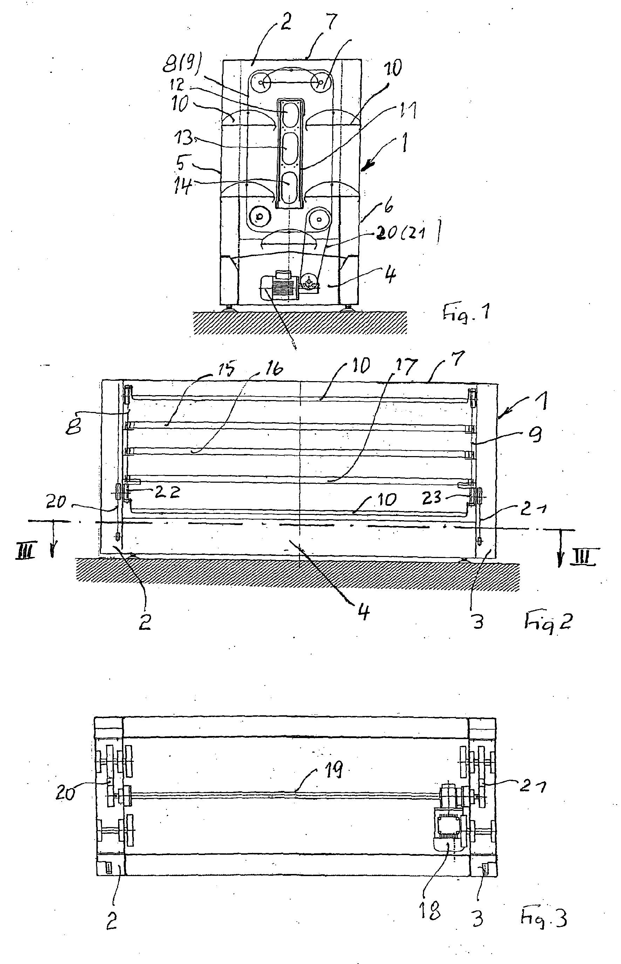

- Fig. 1: einen Schnitt durch ein als Verkaufstheke ausgebildetes Umlaufregal;
- Fig. 2: die Vorderansicht wesentlicher Teile des Umlaufregales gemäß Fig. 1 und
- Fig. 3: einen Schnitt längs der Linie III-III in Fig. 2.

In den Figuren ist 1 das Gehäuse eines Umlaufregales, das zwei nicht einsehbare Seitenteile 2 und 3 und einen ebenfalls nicht einsehbaren Bodenteil 4 aufweist. Die Vorderseite 5 und die Rückseite 6 des Umlaufregales bestehen ebenso wie dessen Oberseite 7 im zwischen den Seitenteilen 2, 3 gelegenen Bereich des Gehäuses 1 aus Glas, insbesondere Acrylglas. Im einsehbaren Mittelteil des Gehäuses laufen schwenkbar an zwei Antriebssträngen 8 und 9 aufgehängte Tablare 10 um. Im Zwischenraum zwischen den auf- bzw. abwärtsbewegten Tablaren 10 ist ein Leuchtschacht 11 angeordnet, dessen Wände aus transluzentem, aber nicht durchsichtigem Material bestehen, das die Gewähr für eine gleichmäßige Ausleuchtung des vom einsehbaren Inneren des Gehäuses gebildeten Schauraumes bietet.

In dem mit seitlichen Öffnungen 12, 13 und 14 versehenen Leuchtschacht 11 sind drei in Fig. 2 nach Abnahme des Leuchtschachtes 11 erkennbare Leuchtstoffröhren 15, 16, 17 angeordnet. Der Leuchtschacht 11 besteht aus einem satinierten Acrylglaskasten, der unten offen ist und nach oben aus dem Gehäuse 1 herausgezogen werden kann.

Zur Einleitung der Umlaufbewegung in die Antriebsstränge 8 und 9 dient ein im Bodenteil 4 untergebrachter Getriebemotor 18, der eine Welle 19 antreibt, die über Endlosketten 20, 21 jeweils ein Antriebsrad 22 bzw. 23 für die Antriebsstränge 8, 9 antreibt.

## Patentansprüche

1. Umlaufförderer in Paternosterbauart für Präsentationszwecke mit durch Antriebsstränge angetriebenen Tablaren, die längs einer geschlossenen Bahn in einem Gehäuse bewegt werden, das mindestens im Bereich seiner Vorderwand eine die Besichtigung von auf den Tablaren abgelegten Gegenständen erlaubende Scheibe aufweist, **dadurch gekennzeichnet, dass** zwischen den Bewegungsbahnen der Tablare (10) in einem mindestens partiell aus durchscheinendem, aber nicht durchsichtigem Material bestehenden Lichtschacht (11) Leuchtmittel angeordnet sind.

2. Umlaufförderer nach Anspruch 1, **dadurch gekennzeichnet, dass** der Lichtschacht (11) nach Art einer unten offenen, im wesentlichen U-förmigen Haube aus durchscheinendem Material ausgebildet ist.

3. Umlaufförderer nach Anspruch 1 oder 2, **dadurch gekennzeichnet, dass** der Lichtschacht (11) sich über die volle Breite der Tablare (10) erstreckt.

4. Umlaufförderer nach einem der Ansprüche 1 bis 3, **dadurch gekennzeichnet, dass** die Leuchtmittel von mindestens zwei übereinander angeordneten Leuchtstoffröhren (15, 16) gebildet werden.

5. Umlaufförderer nach einem der Ansprüche 1 bis 4, **dadurch gekennzeichnet, dass** im Bereich seiner Tablare (10) sowohl die Vorderseite (5) als auch die Rückseite (6) und die Oberseite (7) des Gehäuses (1) aus Glas, insbesondere Sicherheitsglas bestehen.

6. Umlaufförderer nach einem der Ansprüche 1 bis 5, **dadurch gekennzeichnet, dass** das Gehäuse (1) undurchsichtige Seitenteile (2, 3) aufweist.

7. Umlaufförderer nach Anspruch 6, **dadurch gekennzeichnet, dass** die zwischen den Seitenteilen (2, 3) gelegene Oberseite (7) des Gehäuses (1) einen mit einem Schloss versehenen, aufklappbaren Deckel bildet.

8. Umlaufförderer nach Anspruch 7, **dadurch gekennzeichnet, dass** der Antrieb der Antriebsstränge (8, 9) bei aufgeklapptem Deckel unterbrochen ist.

9. Umlaufförderer nach einem der Ansprüche 1 bis 8, **dadurch gekennzeichnet, dass** die Enden der Tablare (11) schwenkbar an den umlaufenden Antriebssträngen (8, 9) aufgehängt sind.

10. Umlaufförderer nach einem der Ansprüche 1 bis 9, **dadurch gekennzeichnet, dass** er nach Art einer Verkaufstheke ausgebildet ist.

11. Umlaufförderer nach einem der Ansprüche 1 bis 10, **dadurch gekennzeichnet, dass** die Antriebsstränge (8, 9) von Endlosketten gebildet werden.
